# EUROPEAN PATENT APPLICATION

(11) **EP 0 892 417 A1**
(43) Date of publication of application: **20.01.1999**
(21) Application number: 97305202.0
(22) Date of filing: 14.07.1997
(51) Int. Cl.: H01H 21/82, H01H 3/02, A47J 42/56

(54) **Switch mechanism**

(71) Applicant: Yahorng Electronic Co Ltd, Antin Shiang, Tainan (TW); Perry, Julie Elizabeth, Mount Tabor, Halifax HX2 0ZR (GB)
(72) Inventor: Huang, Chin-I, Antin Shiang, Tainan (TW); Tsung, Wu Cheng, Antin Shiang, Tainan (TW); Tien, Chiu San, Antin Shiang, Tainan (TW)
(74) Representative: Wharton, Peter Robert

(57) **Abstract**

A switch mechanism (10) comprising first and second electrical contacts (18, 20) each one representing a different mode of operation of an appliance within which the switch is fitted, and third and fourth electrical contacts (38, 34) each one being operatively and independently connected to actuating means (40), the latter being manually operable to bring either said first and third (18, 38), or said second and fourth (20, 34) contacts together, according to the mode of operation required.

## Description

The present invention relates to a switch mechanism, particularly, though not exclusively, for use with an electrically operated kitchen appliance such as a blender.

According to a first aspect there is provided a switch mechanism comprising first and second electrical contacts each one representing a different mode of operation of an appliance within which the switch is fitted, and third and fourth electrical contacts each one being operatively and independently connected to actuating means, the latter being manually operable to bring either said first and third, or said second and fourth, contacts together, according to the mode of operation required.

Preferably, said first and second contacts are mounted side by side on a single electrical connector, the latter being disposed such that the first and second contacts are normally in a position in which they cannot touch the other contact members (i.e the "off" position) but may be urged by a separate lever mechanism into an operative position in which contact with the third or fourth contact members may be effected by said actuating means.

Conveniently, said first and second contacts are mounted on a resiliently deformable member which is itself acted on by said lever mechanism.

Preferably, said third and fourth contacts are each mounted on a separate, resiliently deformable member each one of which may be acted upon selectively by said actuating means, to bring the aforesaid respective pairs of contacts together.

Conveniently, said actuating means includes a main actuator, in the form of a knob having protrusions thereon which, when the knob is turned, selectively cause the resiliently deformable members to urge the respective contact pairs together.

The actuating means preferably also includes a secondary actuator in the form of a push button which may be depressed to bring the selected pair of contacts together.

The switch mechanism is conveniently mounted on a base plate, which preferably has the resiliently deformable members and contact mountings integrally formed therewith.

Whilst the two different modes of operation would in the preferred embodiment correspond to lower and higher blender speeds, other characteristics of operation could be controlled by the switch mechanism of the present invention.

According to a second aspect of the present invention there is provided an electrically operated appliance incorporating a switch mechanism comprising first and second electrical contacts each one representing a different mode of operation of the appliance, and third and fourth electrical contacts each one being operatively and independently connected to actuating means, the latter being manually operable to bring either said first and third, or said second and fourth, contacts together, according to the mode of operation required.

An embodiment of the present invention will now be described, by way of example only, with reference to the accompanying drawings, in which:
Figure 1 illustrates the switch mechanism in the "off" position,
Figures 2 and 2a illustrates the relevant parts of the mechanism when in the position corresponding to "Speed 1" and "Auto",
Figures 3 and 4 illustrate the relevant parts of the mechanism when in the position corresponding to "Speed 2" and "Pulse", and
Figure 5 illustrates a blender within which the switch mechanism is fitted.

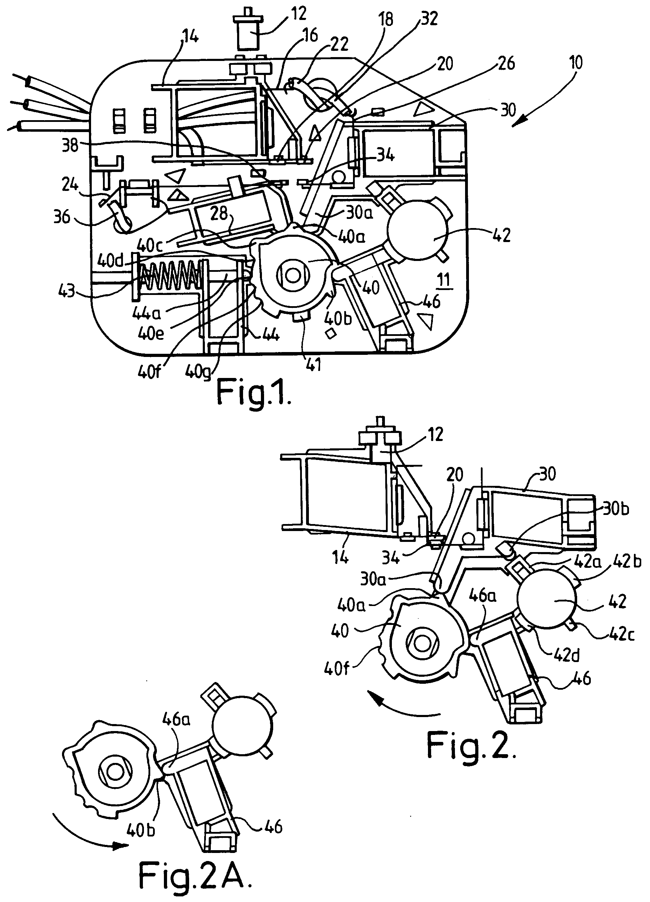

Referring to the drawings, a switch mechanism 10, intended for use within a blender 2, is arranged on a plastic switch plate 11 and includes a switch connector lever 12 which, when pressed downwardly, pushes resiliently deformable plastic member 14 downwards to the position shown in Figures 2 through 4. Secured to the side edge of member 14 is electrical connector 16 which is at one end connected to cable 22 and at the other end terminates in two electrical contacts 18, 20.

Two other electrical connectors 24, 26 are likewise secured to or acted on by resiliently deformable plastic members 28, 30/30a respectively. One end of connector 26 is connected to cable 32 and at the other end terminates in contact 34, whereas one end of connector 24 is connected to cable 36 and at the other end terminates in contact 38.

A plastic speed control knob 40 is positioned generally between and beneath resiliently deformable members 28 and 30 and includes a number of protrusions and recesses numbered 40a through 40g, the purpose of which will become apparent from the following description of the operation of the switch mechanism.

An operating button 42 is disposed so as to be pushed downwards, through a hole in the switch plate 11, and is urged back up again when released by means of a spring disposed between the button interior and the plate. This button 42 has four radially extending lugs numbered 42a through 42d.

Fourth and fifth resiliently deformable plastic members 44 and 46 are acted on by spring 43, tongue 44a, and knob 40 (on member 44) and by knob 40 (on member 46).

In Figure 1, the switch is in the off position, with connector lever 12 not pressed and contact 18, 20 not in contact with any other part of the switch.

In Figure 2, the lever 12 is shown pressed downwards, deforming member 14 downwards as shown, and at the same time rotating knob 40 until protrusion 40a pushes member 30 upwards (via protrusion 30a) as shown and tongue 44a is urged by spring 43 into recess 40f to keep the knob 40 in this selected position, corresponding to "Speed 1". With the knob 40 in this position, contacts 20 (power source) and 34 touch, thus powering the appliance. The same effect is achieved by pressing button 42 downwards, whilst the knob 40 is in the "off" position shown in Figure 1, by virtue of cooperating cam actions of lug 42a and protrusion 30b (protrusions 30a and 30b are simply extensions of member 30). However, with the knob 40 in the position shown in Figure 2, or indeed in the alternative position shown in Figure 2a (in which the knob 40 has been rotated counterclockwise), resilient member 46 is urged via protrusion 46a into position beneath lug 42d, hence preventing button 42 from being depressed.

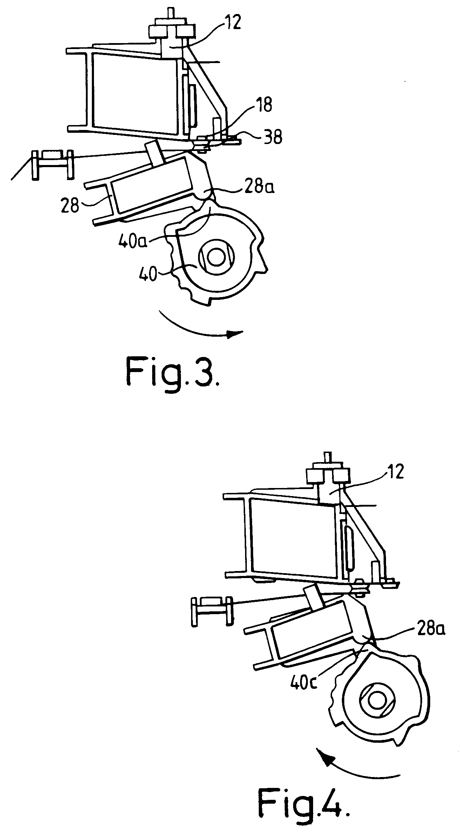

In Figure 3, rotating the knob 40 counterclockwise once to the position shown causes pulse action of the blender, due to protrusion 40a pushing upwards on protrusion 28a (an extension of member 28), bringing contacts 18 and 38 together. The same effect is achieved by turning the knob 40 clockwise twice, as shown in Figure 4, until protrusion 40c pushes upwards on protrusion 28a, urging contacts 18 and 38 together.

Deformable members 28, 30 and 46 are all urged back into their normal positions (as shown in Figure 1) by means of wires (not shown) sprung between the plate 11 and the relevant member.

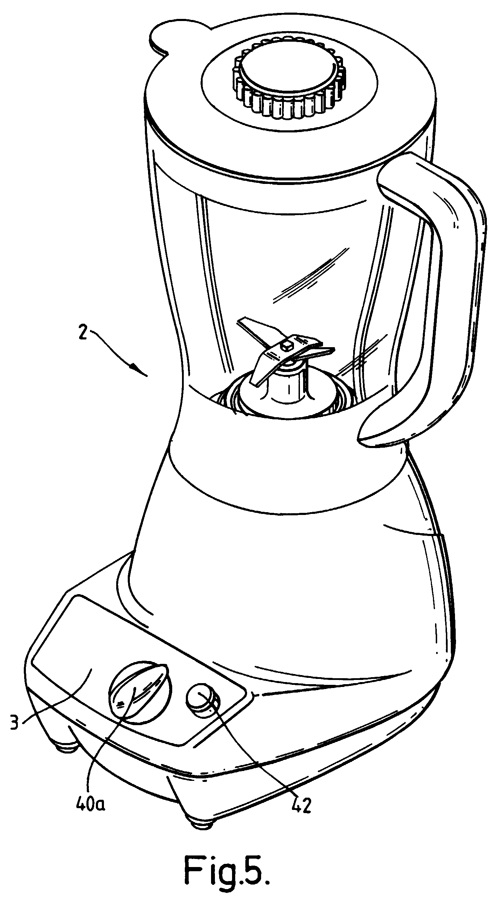

The appearance of the blender to which the switch mechanism of the present invention is fitted is shown in Figure 5 - the knob 40 is operated by gripping shaped knob cover 40', and the button 42 protrudes through a hole in cover plate 3.

## Claims

1. A switch mechanism (10) comprising first and second electrical contacts (18, 20) each one representing a different mode of operation of an appliance within which the switch is fitted, and third and fourth electrical contacts (38, 34) each one being operatively and independently connected to actuating means (40), the latter being manually operable to bring either said first and third (18, 38), or said second and fourth (20, 34), contacts together, according to the mode of operation required.

2. A switch mechanism according to Claim 1, wherein said first and second contacts (18, 20) are mounted side by side on a single electrical connector (16), the latter being disposed such that the first and second contacts are normally in a position in which they cannot touch the other contact members (i.e the "off" position) but may be urged by a separate lever mechanism (12) into an operative position in which contact with the third or fourth contact members (38, 34) may be effected by said actuating means.

3. A switch mechanism according to Claim 2, wherein said first and second contacts (18, 20) are mounted on a resiliently deformable member (14) which is itself acted on by said lever mechanism (12).

4. A switch mechanism according to any of the preceding Claims, wherein said third and fourth contacts (38, 34) are each mounted on a separate, resiliently deformable member (28, 30) each one of which may be acted upon selectively by said actuating means (40), to bring the aforesaid respective pairs of contacts together.

5. A switch mechanism according to any of the preceding Claims, wherein said actuating means includes a main actuator, in the form of a knob (40) having protrusions (40a, 40b, 40c) thereon which, when the knob is turned, selectively cause the resiliently deformable members (28, 30) to urge the respective contact pairs together.

6. A switch mechanism according to any of the preceding Claims wherein the actuating means includes a secondary actuator (42) in the form of a push button which may be depressed to bring the selected pair of contacts together.

7. A switch mechanism according to any of Claims 3 to 6 wherein the switch mechanism is mounted on a base plate (11), which preferably has the resiliently deformable members (14, 28, 30) and contact mountings integrally formed therewith.

8. An electrically operated appliance incorporating a switch mechanism comprising first and second electrical contacts (18, 20) each one representing a different mode of operation of the appliance, and third and fourth electrical contacts (38, 34) each one being operatively and independently connected to actuating means (40), the latter being manually operable to bring either said first and third (18, 38), or said second and fourth (20, 34) contacts together, according to the mode of operation required.
